# EUROPÄISCHE PATENTSCHRIFT

(11) **EP 3 885 497 B1**
(45) Veröffentlichungstag und Bekanntmachung des Hinweises auf die Patenterteilung: **04.06.2025**
(21) Anmeldenummer: 21164305.1
(22) Anmeldetag: 23.03.2021
(51) Int. Cl.: E03C 1/02, H02G 3/12

(54) **WANDEINBAU-ANSCHLUSSBOXEINHEIT MIT VERLÄNGERUNGSHÜLSE**
CONNECTION BOX UNIT BUILT IN TO A WALL WITH AN EXTENSION SLEEVE
UNITÉ DE BOÎTIER DE RACCORDEMENT DESTINÉE À ÊTRE ENCASTRÉE POURVU DE MANCHON D'EXTENSION

(30) Priorität: 24.03.2020 DE 102020203797
(43) Veröffentlichungstag der Anmeldung: 29.09.2021
(73) Patentinhaber: Hansgrohe SE, 77761 Schiltach (DE)
(72) Erfinder: Lehmann, Günther, 77709 Oberwolfach (DE); Schorer, Jürgen, 77761 Schiltach (DE); Doll, Thomas, 77704 Oberkirch (DE)
(74) Vertreter: Patentanwälte Ruff, Wilhelm, Beier, Dauster & Partner mbB

(56) Entgegenhaltungen:
- EP-A2- 2 822 121
- CN-U- 204 732 809
- NO-B1- 336 337
- US-A1- 2017 256 930

## Beschreibung

Die Erfindung bezieht sich auf eine Wandeinbau-Anschlussboxeinheit, die einen Boxgehäusekörper mit einem rückseitigen Basisabschnitt und einem vom Basisabschnitt nach vorn vorstehenden Hülsenabschnitt, der umfangsseitig einen über ein offenes vorderes Stirnende des Hülsenabschnitts zugänglichen Einbaukomponenten-Aufnahmeraum umgibt, eine Verlängerungshülse, die zum koaxialen Anordnen am Hülsenabschnitt und axialen Zurückschieben relativ zum Hülsenabschnitt eingerichtet ist, und eine Haltestruktur umfasst, die ein axiales Zurückschieben der Verlängerungshülse am Hülsenabschnitt von einer Montagestellung in eine Endgebrauchsstellung auf variabler axialer Höhe zulässt und die Verlängerungshülse in der Endgebrauchsstellung am Hülsenabschnitt hält.

Derartige Anschlussboxeinheiten werden beispielsweise in der Sanitärinstallationstechnik zum Anschließen von Einbaukomponenten in Form von Sanitärkomponenten wie Wasserauslaufarmaturen für Waschtische, Badewannen, Duschbrausen oder Küchenspülen oder diesen vorgelagerten sanitären Thermostat-, Mischer- und/oder Absperrventileinheiten, an gebäudeseitig vorinstallierte Wasserleitungsanschlüsse und in der Elektroinstallationstechnik zum Anschließen von elektrischen Einbaukomponenten wie Steckdosen, Abzweigdosen, Sensoren, Aktoren, Lichtschalter etc. an gebäudeseitig vorinstallierte Elektroleitungsanschlüsse verwendet. Typisch sind hierbei vor allem Unterputz-Ausführungen, bei denen die Wandeinbau-Anschlussboxeinheit derart in die betreffende Gebäudewand eingebaut wird, dass sie vorderseitig möglichst bündig mit der fertiggestellten Gebäudewandfläche, z.B. einer verputzten Wandfläche oder einer Fliesenwandfläche, abschließt. Es versteht sich, dass die Gebäudewand hierbei sowohl eine vertikale Gebäudewand im engeren Sinn als auch eine Bodenwand bzw. Bodenfläche oder eine Deckenwand bzw. Deckenfläche eines Gebäudes bzw. Zimmers sein kann, im Sanitärfall z.B. eines Duschraums, eines Badezimmers, eines Toilettenraums, einer Küche etc.

Als verbindendes Bindeglied zum Anschließen der Einbaukomponente an die gebäudeseitigen Leitungsanschlüsse fungiert üblicherweise ein im rückwärtigen Basisabschnitt des Boxgehäusekörpers angeordneter Anschlusskörper, wobei der Basisabschnitt entsprechend zum Anordnen bzw. Halten des Anschlusskörpers eingerichtet ist. Der Anschlusskörper weist eine dem Einbaukomponenten-Aufnahmeraum zugewandte Einbaukomponenten-Anschlusskontur und eine an einer Außenseite des Boxgehäusekörpers zugängliche Leitungs-Anschlussschnittstellenstruktur auf.

Die Leitungs-Anschlussschnittstellenstruktur beinhaltet typischerweise eine oder mehrere Anschlusschnittstellen, im Sanitärfall eine Fluidleitungs-Anschlussschnittstellenstruktur insbesondere in Form entsprechender Rohrleitungs-Anschlussstutzen zum Ankoppeln an je einen korrespondierenden gebäudeseitigen Rohrleitungs-Anschlussstutzen z.B. für Kaltwasser, Warmwasser oder aus Kaltwasser und Warmwasser gemischtes Mischwasser, im Elektrofall eine Elektroleitungs-Anschlussschnittstellenstruktur insbesondere in Form von Kabelleitungsanschlüssen.

Die Einbaukomponenten-Anschlusskontur des Anschlusskörpers, im Sanitärfall eine Sanitärkomponenten-Anschlusskontur und im Elektrofall eine Elektrokomponenten-Anschlusskontur, ist dafür eingerichtet, mit einer korrespondierenden Anschlusskontur einer anzukoppelnden Einbaukomponente, wie einer Misch- und/oder Absperrventileinheit oder einer Wasserauslaufarmatur im Sanitärfall bzw. einer elektrischen Einbaukomponente im Elektrofall, zusammenzuwirken. Im Sanitärfall beinhaltet der Anschlusskörper eine Fluidkanalstruktur zur Fluidverbindung der boxaußenseitigen Fluidleitungs-Anschlussschnittstellenstruktur mit der boxinnenseitigen Sanitärkomponenten-Anschlusskontur, im Elektrofall eine elektrisch leitende Verbindung der boxaußenseitigen Elektroleitungs-Anschlussschnittstellenstruktur mit der boxinnenseitigen Elektrokomponenten-Anschlusskontur.

Die Anschlussboxeinheit wird mit ihrer Rückseite bzw. einem rückseitigen Boden voraus in eine Gebäudewandöffnung eingesetzt oder an einer Gebäudewand, z.B. einer im Trockenbau erstellten Wand, platziert, wobei die benötigten Leitungsverbindungen zwischen den gebäudeseitigen Anschlüssen einerseits und der Anschlussschnittstellenstruktur des Anschlusskörpers andererseits hergestellt werden. Nach Fertigstellung der Wand kann dann über das offene vordere Stirnende des Boxgehäusekörpers die Einbaukomponente in den Aufnahmeraum des Boxgehäusekörpers eingebracht und an die passende Anschlusskontur des Anschlusskörpers angekoppelt werden.

Eine bekannte Problematik bei der Wandmontage solcher und ähnlicher Anschlussboxeinheiten besteht darin, dass die Lage der Anschlussboxeinheit bezogen auf die fertige Gebäudewandoberfläche, insbesondere hinsichtlich ihrer Einbautiefe im Fall eines Unterputz-Einbaus, noch nicht exakt vorgegeben ist, solange die Gebäudewand noch nicht fertiggestellt ist, insbesondere noch nicht verputzt, verfliest oder in anderer Weise verkleidet ist.

Dieser Problematik wird bei Anschlussboxeinheiten der vorliegend betrachteten Art durch die Verlängerungshülse abgeholfen, die unter Verwendung der Haltestruktur teleskopierbar beweglich am Hülsenabschnitt des Boxgehäusekörpers angeordnet, d.h. koaxial am Hülsenabschnitt angeordnet und an diesem und relativ zu diesem axial höhenverstellbar geführt, und in einer variabel vorgebbaren, gewünschten axialen Position am Hülsenabschnitt gehalten werden kann. Insbesondere kann die Verlängerungshülse von einer anfänglichen Montagestellung in eine finale Endgebrauchsstellung um ein variables axiales Maß nach hinten, d.h. in Richtung Basisabschnitt des Boxgehäusekörpers bzw. in Richtung größerer axialer Überlappung mit dem Hülsenabschnitt, zurückgeschoben werden. Optional kann die Verlängerungshülse nicht nur unidirektional axial zurückbewegt, sondern bidirektional zusätzlich auch wieder nach vorn, d.h. in Richtung vom Basisabschnitt des Boxgehäusekörpers weg bzw. in Richtung geringerer axialer Überlappung mit dem Hülsenabschnitt, vorbewegt werden. Dabei ist die Verlängerungshülse je nach Bedarf und Anwendungsfall innenumfangsseitig oder außenumfangsseitig am Hülsenabschnitt geführt. In ersterem Fall besitzt sie einen geeignet geringeren Außendurchmesser als ein Innendurchmesser des Hülsenabschnitts und wird umfangsseitig vom Hülsenabschnitt umgeben, im anderen Fall besitzt sie einen geeignet größeren Innendurchmesser als ein Außendurchmesser des Hülsenabschnitts und umgibt umfangsseitig den Hülsenabschnitt.

Zur Montage dieser Anschlussboxeinheiten an der Gebäudewand wird die Verlängerungshülse zunächst in der Montagestellung, bei der es sich um eine ausreichend weit nach vorn über den Hülsenabschnitt hinaus vorstehende Stellung handelt, gehalten, die sicherstellt, dass sich die Anschlussboxeinheit nach ihrer Wandmontage mit ihrer Verlängerungshülse nach vorn mindestens bis zur geplanten fertigen Gebäudewandoberfläche erstreckt, vorzugsweise nach vorn über diese vorsteht und jedenfalls nicht hinter dieser zurückbleibt. Sobald dann anschließend die Gebäudewand fertiggestellt ist, kann die Verlängerungshülse, wenn bzw. soweit sie in ihrer Montagestellung über die Oberfläche der fertiggestellten Gebäudewand vorsteht, axial bis in eine für den Gebrauch der Anschlussboxeinheit nach Fertigstellung der Gebäudewandoberfläche letztlich gewünschte Stellung zurückgeschoben werden, vorzugsweise bis zum vorderseitig bündigen oder annähernd bündigen Abschließen mit der fertigen Wandoberfläche. Dadurch entfällt ein aufwändiges Abschneiden eines über die fertige Wandoberfläche überstehenden Hülsenteils, wie dies oftmals bei herkömmlichen Anschlussboxeinheiten ohne eine solche Verlängerungshülse erforderlich ist. Diese letztlich gewünschte Stellung der Verlängerungshülse stellt somit deren jeweilige Endgebrauchsstellung dar, deren axiale Höhe relativ zum Hülsenabschnitt des Boxgehäusekörpers je nach dem sich ergebenden, senkrecht zur Wandoberfläche gemessenen Höhenniveau der fertiggestellten Wandoberfläche variieren kann. Die Haltestruktur lässt dieses axiale Zurückschieben der Verlängerungshülse am Hülsenabschnitt von der Montagestellung in die Endgebrauchsstellung auf variabler axialer Höhe zu und sorgt dafür, dass die Verlängerungshülse in der Endgebrauchsstellung ausreichend sicher am Hülsenabschnitt gehalten ist.

Die Offenlegungsschrift DE 10 2012 203 393 A1 offenbart eine Wandeinbau-Anschlussboxeinheit der eingangs genannten Art, bei der die dort als Manschette bezeichnete Verlängerungshülse mit ihrer Mantelaußenseite an der Mantelinnenseite des Hülsenabschnitts des Boxgehäusekörpers axial stufenlos höhenverstellbar geführt ist und die Haltestruktur hierzu einen Dichtring beinhaltet, der in einer außenseitigen Dichtringaufnahme der Manschette radial nach außen vorstehend aufgenommen ist, so dass er mit einer gewissen Flächenpressung gegen die Innenseite des Hülsenabschnitts des Boxgehäusekörpers anliegt, um eine stufenlos verstellbare und abdichtende, reibschlüssige Verbindung von Manschette und Hülsenabschnitt des Boxgehäusekörpers bereitzustellen.

Die Offenlegungsschrift WO 2017/091839 A1 offenbart eine Wandeinbau-Anschlussboxeinheit der eingangs genannten Art, bei der die axial höhenverstellbare Verlängerungshülse als eine Montagehülse ausgebildet ist, die an ihrem freien vorderen Stirnende ein Befestigungsmittel zum Befestigen einer Anbaukomponente, wie z.B. einer sanitären Mischerarmatur, aufweist, und bei der die Haltestruktur zusammenwirkende, umfangsseitig durchgehende oder nur in Segmentbereichen ausgebildete Raststegstrukturen an der Montagehülse einerseits und am Hülsenabschnitt des Boxgehäusekörpers andererseits beinhaltet, wodurch die Montagehülse entsprechend gestuft in mehreren unterschiedlichen axialen Höhenstufen am Hülsenabschnitt des Boxgehäusekörpers verrastet gehalten werden kann. Die Verrastung kann mittels einer zusätzlich einzubringenden Sicherungshülse verriegelt werden.

Die Offenlegungsschrift US 2017/0256930 A1 offenbart eine Wandeinbau-Anschlussboxeinheit zur Verwendung bei Elektroinstallationen mit einem Boxgehäusekörper aus einem Metallmaterial, alternativ einem Kunststoffmaterial, der einen von einem Basisabschnitt vorstehenden Hülsenabschnitt aufweist, und mit einer Verlängerungshülse, die in einer ersten Drehstellung in den Hülsenabschnitt axial eingeschoben und dann durch Verdrehen in eine zweite Drehstellung nach Art eines Bajonettverschlusses in variabler Höhe axial am Hülsenabschnitt festgelegt werden kann, wozu eine entsprechende Bajonettverschluss-Haltestruktur mit stegartigen radialen Vorsprüngen und Vertiefungen an einer Außenfläche der Verlängerungshülse und einer Innenfläche des Hülsenabschnitts vorgesehen ist. Vor dem Einfügen der Verlängerungshülse kann ein Kabeltrenneinsatz über den Hülsenabschnitt in den Basisabschnitt des Boxgehäusekörpers eingebracht werden.

Die Patentschrift NO 336337 B1 offenbart eine Wandeinbau-Anschlussboxeinheit der eingangs genannten Art, wobei dort die Verlängerungshülse als Zweikomponenten-Einstellring mit einem Befestigungsringteil und einem Dichtringteil aus einem gleichen elastischen Material und einem Ringkörperteil aus einem nicht-elastischen Material gefertigt ist und die Haltestruktur einen Keilring beinhaltet, der mittels Schrauben mit dem Einstellring verbunden und dabei axial gegen dessen Befestigungsringteil gedrückt werden kann, wodurch letzterer radial nach außen gegen einen mit Furchen versehenen Innenumfang des Hülsenabschnitts des Boxgehäusekörpers gedrückt wird.

Die Offenlegungsschrift EP 2 822 121 A2 offenbart eine Wandeinbau-Anschlussboxeinheit der eingangs genannten Art, die zwei ineinander steckbare und gegeneinander über zusammenwirkende Gewinde verdrehbare Verlängerungshülsen beinhaltet, wobei die Gewinde überfahrbar sind, so dass die eine Verlängerungshülse alternativ zum Eindrehen teleskopartig in die andere Verlängerungshülse eingeschoben werden kann. Dazu ist die äußere Verlängerungshülse aus einem dünneren und/oder flexibleren Material gebildet als die am Hülsenabschnitt des festgelegte Verlängerungshülse.

Weitere herkömmliche Wandeinbau-Anschlussboxeinheiten ähnlicher Art sind in der Gebrauchsmusterschrift CN 204732809 U und der Offenlegungsschrift EP 3 703 207 A1 offenbart.

Der Erfindung liegt als technisches Problem die Bereitstellung einer Wandeinbau-Anschlussboxeinheit der eingangs genannten Art zugrunde, die gegenüber dem oben erwähnten Stand der Technik insbesondere funktionelle Vorteile und/oder Vorteile hinsichtlich Fertigungs- und/oder Montageaufwand bietet.

Die Erfindung löst dieses Problem durch die Bereitstellung einer Wandeinbau-Anschlussboxeinheit mit den Merkmalen des Anspruchs 1. Vorteilhafte Weiterbildungen der Erfindung sind in den Unteransprüchen angegeben, deren Wortlaut hiermit durch Verweis zum Bestandteil der Beschreibung gemacht wird. Dies schließt insbesondere auch alle Ausführungsformen der Erfindung ein, die sich aus den Merkmalskombinationen ergeben, die durch die Rückbezüge in den Unteransprüchen definiert sind.

Erfindungsgemäß beinhaltet die Haltestruktur eine am Hülsenabschnitt radial abstehende Haltewulststruktur, die aus einem abdichtend nachgiebigen Material einteilig mit zumindest einem angrenzenden axialen Teilbereich des Hülsenabschnitts aus dem abdichtend nachgiebigen Material gebildet ist, und eine mit der Haltewulststruktur reib- und/oder formschlüssig zusammenwirkende Gegenhaltestruktur, die an der Verlängerungshülse aus einem gegenüber dem abdichtend nachgiebigen Material steiferen Material gebildet ist.

Indem die Haltewulststruktur mit dem Hülsenabschnitt insgesamt oder jedenfalls mit einem an die Haltewulststruktur angrenzenden axialen Teilbereich des Hülsenabschnitts einteilig gebildet ist, können zusätzliche Bauteilkomponenten für das Bereitstellen der Haltewulststruktur und entsprechender Fertigungsaufwand eingespart werden.

Indem die Haltewulststruktur aus abdichtend nachgiebigem Material gebildet ist, kann sie im reib- und/oder formschlüssigen Zusammenwirken mit der demgegenüber steiferen Gegenhaltestruktur an der Verlängerungshülse für eine gewünschte fluiddichte Verbindung von Verlängerungshülse und Hülsenabschnitt des Boxgehäusekörpers sorgen, ohne dass hierfür zusätzliche separate Abdichtmaßnahmen zwingend erforderlich sind. Beispielsweise ist für die Haltewulststruktur ein Gummimaterial oder ein Kunststoffschaummaterial verwendbar.

Indem die Gegenhaltestruktur an der Verlängerungshülse aus gegenüber dem abdichtend nachgiebigen Material der Haltewulststruktur steiferem Material gebildet ist, kann durch die Materialverbindung von abdichtend nachgiebigem, weicherem Material einerseits und steiferem Material andererseits eine sowohl zuverlässig abdichtende als auch zuverlässig reib- und/oder formschlüssig festhaltende Verbindung von Verlängerungshülse und Hülsenabschnitt bereitgestellt werden, die zudem die teleskopisch axiale Höhenverstellbarkeit der Verlängerungshülse am Hülsenabschnitt des Boxgehäusekörpers zulässt. Das steifere Material der Gegenhaltestruktur kann beispielsweise ein gegenüber dem Material der Haltewulststruktur steiferes Kunststoffmaterial oder ein Metallmaterial sein. Je nach Bedarf und Anwendungsfall kann die Verlängerungshülse vollständig oder nur im Bereich der Gegenhaltestruktur aus dem Material der Gegenhaltestruktur gebildet sein. Insbesondere lässt diese erfindungsgemäße Ausführung der Haltestruktur bei Bedarf eine stufenlose Höhenverstellbarkeit der Verlängerungshülse gegenüber dem Hülsenabschnitt des Boxgehäusekörpers zu.

In einer Weiterbildung der Erfindung umfasst die Wandeinbau-Anschlussboxeinheit ein abnehmbares Abstandshalterelement, das abnehmbar am Boxgehäusekörper in einer Sicherungsstellung anbringbar ist, in der es die Verlängerungshülse in der Montagestellung gegen axiales Zurückschieben sichert.

Mit diesem Abstandshalterelement kann die Anschlussboxeinheit insbesondere gegen ein unabsichtliches axiales Zurückschieben der Verlängerungshülse relativ zum Hülsenabschnitt des Boxgehäusekörpers vor und/oder während der Montage der Anschlussboxeinheit gesichert werden. Dies kann vorteilhaft dafür genutzt werden, die Verlängerungshülse bereits in einem Auslieferungszustand der Anschlussboxeinheit nach deren Fertigung oder jedenfalls bevor die Anschlussboxeinheit in oder an einer Gebäudewand angebracht wird, am Hülsenabschnitt des Boxgehäusekörpers vormontiert in der Montagestellung gegen Zurückschieben gesichert zu halten, wobei es sich bei dieser Montagestellung z.B. um eine maximal über den Hülsenabschnitt hinaus nach vorn vorstehende Stellung der Verlängerungshülse handeln kann. Beim Wandeinbau der Anschlussboxeinheit wird dann spätestens nachdem die Wandoberfläche der Gebäudewand fertiggestellt ist und die Verlängerungshülse von ihrer Montagestellung in ihre Endgebrauchsstellung, in der sie mit ihrem vorderen Stirnende bzw. Stirnrand z.B. im Wesentlichen bündig mit der fertigen Wandoberfläche abschließt, zurückgeschoben werden soll, das Abstandshalterelement abgenommen, d.h. entfernt, wonach die Verlängerungshülse um das gewünschte Maß axial zurückgeschoben werden kann. Das Abnehmen bzw. Entfernen des Abstandshalterelements vom Boxgehäusekörper kann je nach Ausführung zerstörungsfrei oder unter Zerstörung des Abstandshalterelements erfolgen. In ersterem Fall kann es bei Bedarf wiederverwendet werden, in letzterem Fall ist es als zerstörend abnehmbares Einwegbauteil ausgeführt.

In einer Weiterbildung der Erfindung beinhaltet die Haltewulststruktur eine umfangsseitig durchgehend umlaufende Haltewulst, die an einer Innenseite des Hülsenabschnitts radial nach innen oder an einer Außenseite des Hülsenabschnitts radial nach außen absteht. Dies stellt eine konstruktiv und funktionell vorteilhafte Realisierung der Haltewulststruktur dar. Die Haltewulst erstreckt sich durchgehend über den gesamten Umfang des Hülsenabschnitts und kann dadurch sowohl für ein sicheres Halten der Verlängerungshülse am Hülsenabschnitt des Boxgehäusekörpers als auch für eine zuverlässige Abdichtung der Verbindung von Hülsenabschnitt und Verlängerungshülse sorgen.

Als Gegenhaltestruktur weist die Verlängerungshülse dazu passend bevorzugt einen das abdichtende Halten am Hülsenabschnitt im Zusammenwirken mit der Haltewulst fördernden, strukturierten bzw. profilierten Oberflächenbereich auf, alternativ genügt als mit der Haltewulst zusammenwirkende Gegenhaltestruktur an der Verlängerungshülse schon deren äußere oder innere Hülsenmantelfläche als solche. Die Haltewulst kann sich abdichtend gegen das steifere Material der Gegenhaltestruktur im entsprechenden profilierten oder nicht profilierten Oberflächenbereich der Verlängerungshülse anlegen. In entsprechenden Ausführungen beinhaltet die Haltewulststruktur nur eine einzige solche Haltewulst oder eine beliebige Mehrzahl solcher Haltewülste, die in axialem Abstand voneinander angeordnet sind.

In einer Weiterbildung der Erfindung ist die Haltewulststruktur aus einem Kunststoffschaummaterial, insbesondere einem thermoplastischen Partikelschaummaterial, gebildet. Dies stellt eine vorteilhafte Realisierung der Haltewulststruktur dar, die insbesondere mit der Maßnahme kombiniert sein kann, dass der Hülsenabschnitt des Boxgehäusekörpers insgesamt, in entsprechenden Ausführungen der gesamte Boxgehäusekörper, aus dem Kunststoffschaummaterial bzw. dem thermoplastischen Partikelschaummaterial gebildet ist. Das Kunststoffschaummaterial ermöglicht in fertigungstechnisch einfacher Weise die Bereitstellung der für die Haltewulststruktur geforderten funktionellen Eigenschaften hinsichtlich ausreichend axial verschiebbarem Führen und sicherem Halten der Verlängerungshülse am Hülsenabschnitt und hinsichtlich fluiddichter Verbindung von Verlängerungshülse und Hülsenabschnitt. Alternativ kann die Haltewulststruktur z.B. auch aus einem Dichtgummimaterial oder einem anderen, für die Abdichtung ähnlicher Verbindungen dem Fachmann an sich bekannten Material gebildet sein.

In einer Weiterbildung der Erfindung beinhaltet die Gegenhaltestruktur eine Haltezahnstruktur mit einer Mehrzahl von axial aufeinanderfolgenden Haltezähnen, die umfangsseitig verlaufend an einer Außenseite der Verlängerungshülse radial nach außen oder an einer Innenseite der Verlängerungshülse radial nach innen abstehen. Dies stellt eine hinsichtlich Halte- und Abdichtfunktion vorteilhafte Realisierung der Gegenhaltestruktur dar. Die Gegenhaltestruktur kann in diesem Fall mit ihren Haltezähnen in das abdichtend nachgiebige Material der Haltewulststruktur eingreifen und auf diese Weise sehr einfach und zuverlässig für ein mechanisch sicheres Halten und fluidtechnisch sicheres Abdichten der Verlängerungshülse gegenüber dem Hülsenabschnitt des Boxgehäusekörpers sorgen. Da mehrere Haltezähne axial aufeinanderfolgend angeordnet sind bzw. das Eingreifen der Haltezähne in die Haltewulststruktur quasi stufenlos in jeder axialen Höhe innerhalb des axialen Wirkbereichs von Haltezahnstruktur und Haltewulststruktur möglich ist, lässt sich die Verlängerungshülse sehr einfach variabel und vorzugsweise stufenlos axial am Hülsenabschnitt verstellen, insbesondere zurückschieben, und auf diese Weise in ihre jeweils gewünschte optimale Endgebrauchsstellung am Hülsenabschnitt des Boxgehäusekörpers verbringen und zuverlässig abgedichtet halten.

In einer Ausgestaltung der Erfindung bildet die Haltezahnstruktur mit ihren Haltezähnen ein Sägezahnprofil mit in Zurückschieberichtung der Verlängerungshülse weisenden, flacheren Zahnrückflanken und gegenüberliegenden, steileren Zahnfrontflanken. Diese spezielle Gestaltung der Haltezähne ermöglicht es, das Vorbewegen der Verlängerungshülse aus der Endgebrauchsstellung heraus im Vergleich zum Zurückbewegen von der Montagestellung in die Endgebrauchsstellung zu erschweren, wodurch der wünschenswerte Effekt erzielt wird, dass ein Vorbewegen der Verlängerungshülse nach vorn aus ihrer Endgebrauchsstellung heraus verhindert oder jedenfalls im Vergleich zum Kraftaufwand für das Zurückschieben der Verlängerungshülse von ihrer Montagestellung in ihre Endgebrauchsstellung erschwert wird.

In einer Ausgestaltung der Erfindung ist die Haltezahnstruktur mit axialem Abstand von einem rückwärtigen Stirnende der Verlängerungshülse angeordnet, und ein sich vom rückwärtigen Stirnende axial bis höchstens zur Haltezahnstruktur erstreckender Abschnitt der Verlängerungshülse bildet einen Vormontage-Steckbereich, der zum vormontiert gesteckten Halten der Verlängerungshülse in ihrer Montagestellung am Hülsenabschnitt des Boxgehäusekörpers eingerichtet ist. Dies ermöglicht eine einfache Vormontage der Verlängerungshülse am Hülsenabschnitt des Boxgehäusekörpers, indem die Verlängerungshülse mit ihrem Vormontage-Steckbereich in den Hülsenabschnitt eingesteckt bzw. auf diesen aufgesteckt wird. Dazu braucht die Haltezahnstruktur noch nicht mit der Haltewulststruktur an der Verlängerungshülse in Wirkverbindung sein, so dass die Verbindung von Haltezahnstruktur und Haltewulststruktur keinen Belastungen ausgesetzt ist, solange die Verlängerungshülse noch nicht in ihre Endgebrauchsstellung zurückgeschoben worden ist. Der Vormontage-Steckbereich kann z.B. einfach von einem nicht eigens profilierten Stirnendbereich der inneren oder äußeren Mantelfläche der Verlängerungshülse gebildet sein, alternativ kann er zusätzlich eine das temporäre Halten der Verlängerungshülse am Hülsenabschnitt des Boxgehäusekörpers in der Montagestellung unterstützende Profilierung besitzen.

In einer Weiterbildung der Erfindung weist die Verlängerungshülse an einem vorderen Stirnende einen radial nach außen abstehenden Abschlussringflansch auf. Der Abschlussringflansch lässt sich für diverse Anwendungen nutzen, beispielsweise zum Anbringen einer Abdeckrosette oder als Ringanschlag zum Anlegen gegen die fertiggestellte Oberfläche der Gebäudewand in der Endgebrauchsstellung der Verlängerungshülse. In alternativen Ausführungsformen endet die Verlängerungshülse am vorderen Stirnende ohne radial nach außen abstehenden Ringflansch.

In einer Weiterbildung der Erfindung ist an einem vorderen Stirnende der Verlängerungshülse ein Montagedeckel abnehmbar anbringbar, z.B. durch einfaches Aufstecken und Abziehen. Der Montagedeckel lässt sich beispielsweise dazu nutzen, den Innenraum der Verlängerungshülse und des Hülsenabschnitts des Boxgehäusekörpers vor und/oder während der Wandmontage der Anschlussboxeinheit vor Verschmutzungen zu schützen. Weiter lässt er sich bei Bedarf zum Halten oder Anlegen einer Wasserwaage oder Libelle bzw. Dosenlibelle nutzen. In diesem Fall weist er außenseitig vorzugsweise eine entsprechende Wasserwaagen-Anlagestruktur oder Libellenhalterung auf. Optional besitzt der Montagedeckel außenseitig einen vorzugsweise mittigen Griffdorn als Handhabungshilfe für den Benutzer. Nach beendeter Wandmontage der Anschlussboxeinheit wird der Montagedeckel entfernt.

In einer Weiterbildung der Erfindung beinhaltet das Abstandshalterelement eine Abstandshalterhülse, die in der Sicherungsstellung koaxial am Hülsenabschnitt in einem axialen Bereich hinter der Verlängerungshülse angeordnet ist. Dabei kann in entsprechenden Realisierungen die Abstandshalterhülse in den Hülsenabschnitt herausnehmbar eingelegt und von diesem umfangsseitig umgeben sein, wenn die Verlängerungshülse innenumfangsseitig am Hülsenabschnitt geführt ist, oder alternativ den Hülsenabschnitt umfangsseitig umgebend an diesem abnehmbar angeordnet sein, wenn die Verlängerungshülse außenumfangsseitig am Hülsenabschnitt geführt ist.

Vorzugsweise ist die Abstandshalterhülse derart realisiert, dass sie mit wenig Aufwand herstellbar ist und ein einfaches Anbringen und bevorzugt zerstörungsfreies Abnehmen bzw. Entfernen vom Boxgehäusekörper erlaubt. Alternativ kann die Abstandshalterhülse als unter Zerstörung entfernbare Einweghülse ausgebildet sein. In beiden Fällen kann die Abstandshalterhülse aus einem beliebigen Material gebildet sein, das die erwähnten Eigenschaften zulässt und wenig Realisierungsaufwand erfordert, z.B. aus einem geeignet elastisch oder unelastisch verformbaren Material, wie aus Pappe oder einem biegeelastischen Kunststoff. Die Abstandshalterhülse kann je nach Bedarf und Anwendungsfall von einem umfangsseitig durchgehenden, geschlossenen Hülsenteil oder alternativ von einem umfangsseitig offenen Hülsenteil mit durchgehendem Axialschlitz, d.h. einem sich nur über einen Umfangswinkel von weniger als 360° erstreckenden, offenen Hülsenteil, gebildet sein. Wesentlich ist jeweils nur, dass die Abstandshalterhülse etwaigen axialen Druckeinwirkungen der Verlängerungshülse vor und/oder während der Wandmontage der Anschlussboxeinheit standhält, um währenddessen die Verlängerungshülse auch dann in ihrer Montagestellung zu halten, wenn auf das vordere Stirnende der Verlängerungshülse eine axiale Druckkraft einwirkt.

In alternativen Ausführungen beinhaltet das Abstandshalterelement z.B. einen am Hülsenabschnitt des Boxgehäusekörpers radial abstehend, vorzugsweise abziehbar, gehaltenen Blockerstift, der den axialen Bewegungsweg der Verlängerungshülse blockiert, oder eine lösbare Clipsverbindung, mit der die Verlängerungshülse in ihrer Montagestellung an den Hülsenabschnitt angeclipst gehalten ist.

In einer Ausgestaltung der Erfindung ist die Abstandshalterhülse als eine umfangsseitig offene, zusammenziehbare Ringhülse ausgebildet und weist eine nutzerbetätigbare Zuziehbetätigungsstruktur auf. Dies ermöglicht dem Benutzer ein sehr einfaches, zerstörungsfreies Einfügen der Abstandshalterhülse in den Hülsenabschnitt des Boxgehäusekörpers und/oder Herausnehmen der Abstandshalterhülse aus dem Hülsenabschnitt, indem er die offene Ringhülse an der als Handhabungshilfe fungierenden Zuziehbetätigungsstruktur z.B. mit den Fingern einer Hand fasst und radial zusammendrückt, d.h. zusammenzieht, so dass sich ihre radiale Ausdehnung verglichen mit ihrer Gebrauchslage im Hülsenabschnitt verringert.

In einer Ausgestaltung der Erfindung weist die Abstandshalterhülse an einem vorderen Stirnende eine radial nach innen abkragende Flanschstruktur auf. Diese Flanschstruktur lässt sich beispielsweise als Anschlagfläche nutzen, gegen welche die Verlängerungshülse zur Anlage kommt, wenn sie mit dem Hülsenabschnitt des Boxgehäusekörpers zusammengesteckt wird, um in ihre Montagestellung gebracht zu werden. Die Flanschstruktur sichert dann vor einem weiteren axialen Zurückbewegen der Verlängerungshülse weiter in den Hülsenabschnitt des Boxgehäusekörpers hinein. Die Flanschstruktur kann bei Bedarf auch gleichzeitig als die erwähnte Zuziehbetätigungsstruktur für den Benutzer fungieren.

Vorteilhafte Ausführungsformen der Erfindung sind in den Zeichnungen dargestellt. Diese und weitere vorteilhafte Ausführungsformen der Erfindung werden nachfolgend näher beschrieben. Hierbei zeigen:
- Fig. 1: eine Längsschnittansicht einer Wandeinbau-Anschlussboxeinheit je hälftig in einer Montagestellung und einer zurückgeschobenen Endgebrauchsstellung einer Verlängerungshülse,
- Fig. 2: eine perspektivische Explosionsansicht der Anschlussboxeinheit von Fig. 1 mit zusätzlichen, temporär benutzten Komponenten,
- Fig. 3: eine Längsschnittansicht der Anschlussboxeinheit von Fig. 2 im zusammengefügten Zustand der Einzelteile,
- Fig. 4: eine Perspektivansicht der Verlängerungshülse für die Anschlussboxeinheit der Fig. 1 bis 3,
- Fig. 5: eine Längsschnittansicht der Verlängerungshülse von Fig. 4,
- Fig. 6: eine Detailansicht eines Bereichs VI in Fig. 5,
- Fig. 7: eine Perspektivansicht eines Abstandshalterelements für die Anschlussboxeinheit von Fig. 2 und
- Fig. 8: eine Längsschnittansicht der Anschlussboxeinheit entsprechend Fig. 1 mit der Verlängerungshülse in einer gegenüber Fig. 1 weniger weit zurückgeschobenen Endgebrauchsstellung.

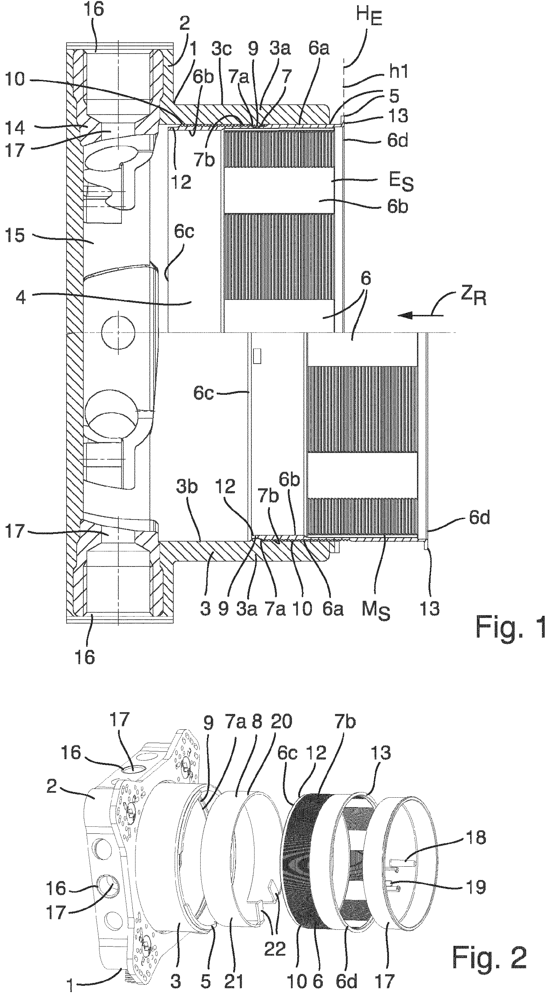

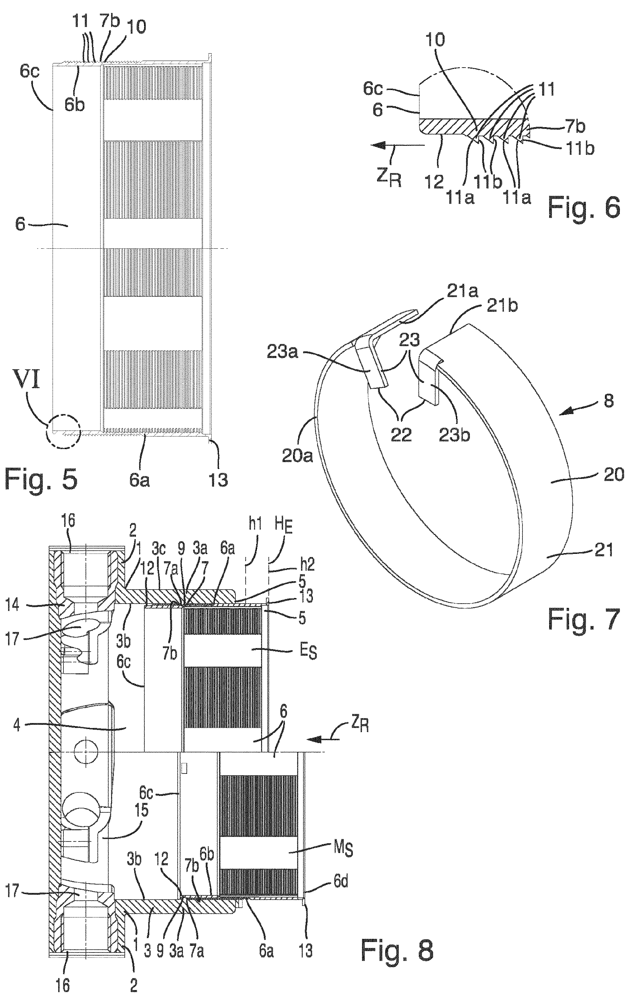

Wie in den gezeigten Ausführungsformen exemplarisch veranschaulicht, umfasst die erfindungsgemäße Wandeinbau-Anschlussboxeinheit einen Boxgehäusekörper 1 mit einem rückseitigen Basisabschnitt 2 und einem vom Basisabschnitt nach vorn vorstehenden Hülsenabschnitt 3, eine Verlängerungshülse 6 und eine Haltestruktur 7. Der Hülsenabschnitt 3 des Boxgehäusekörpers 1 umgibt umfangsseitig einen über ein offenes vorderes Stirnende 5 des Hülsenabschnitts 3 zugänglichen Einbaukomponenten-Aufnahmeraum 4, wie beispielsweise aus den Fig. 1 bis 3 ersichtlich. Die Verlängerungshülse 6 ist zum koaxialen Anordnen am Hülsenabschnitt 3 und axialen Zurückschieben relativ zum Hülsenabschnitt 3 eingerichtet ist. Die Haltestruktur 7 lässt ein axiales Zurückschieben der Verlängerungshülse 6 am Hülsenabschnitt 3 von einer in den Fig. 1, 3 und 8 ersichtlichen Montagestellung M_{S} in eine in den Fig. 1 und 8 zu erkennende Endgebrauchsstellung E_{S} zu und hält die Verlängerungshülse 6 in der Endgebrauchsstellung E_{S} am Hülsenabschnitt 3. Die Montagestellung M_{S} ist hierbei vorzugsweise eine Position der Verlängerungshülse 6 am Hülsenabschnitt 3, in welcher die Verlängerungshülse 6 einerseits weit genug über den Hülsenabschnitt 3 des Boxgehäusekörpers 1 vorsteht, um auch während und nach der Fertigstellung der betreffenden Gebäudewandoberfläche noch über diese vorzustehen und jedenfalls nicht hinter deren endgültigem Oberflächen-Höhenniveau zurückzubleiben, und andererseits ausreichend sicher am Hülsenabschnitt 3 vormontiert gehalten ist, indem sie bereits eine gewisse axiale Überdeckung mit dem Hülsenabschnitt 3 besitzt.

Die Endgebrauchsstellung E_{S} befindet sich dabei auf einer variablen axialen Höhe H_{E}, d.h. die Verlängerungshülse 6 kann je nach Bedarf in dieser gewünschten axialen Höhe H_{E} variabel relativ zum Hülsenabschnitt 3 des Boxgehäusekörpers 1 in ihre Endgebrauchsstellung E_{S} gebracht und dort durch die Haltestruktur 7 gegen unbeabsichtigtes axiales Wegbewegen gesichert gehalten werden. Exemplarisch zeigen die Fig. 1 und 8 zwei unterschiedliche Endgebrauchsstellungen E_{S}, wobei sich die Verlängerungshülse 6 im Fall von Fig. 8 in einer weiter vorn liegenden Endgebrauchsstellung E_{S} als im Fall von Fig. 1 befindet, d.h. eine vordere Stirnseite 6d der Verlängerungshülse 6 liegt bezogen auf den Hülsenabschnitt 2 des Boxgehäusekörpers 1 im Fall von Fig. 8 auf einer weiter vorn liegenden axialen Höhe h2 als eine in Fig. 8 zu Vergleichszwecken zusätzlich angegebene axiale Höhe h1, auf der diese vordere Stirnseite 6d im Fall von Fig. 1 liegt. Die somit nicht so weit in Richtung Gebäudewandtiefe hinein zurückgeschobene Endgebrauchsstellung E_{S} der Verlängerungshülse 6 gemäß Fig. 8 eignet sich z.B. für Fälle, bei denen die Fertigstellung der Gebäudewand eine größere zusätzliche Wanddicke zur Folge hat oder bei denen die gebäudeseitigen Leitungsanschlüsse bezogen auf die Oberfläche der fertiggestellten Wandoberfläche tiefer in der Wand, d.h. weiter nach hinten versetzt, liegen als im Fall von Fig. 1. Mit den Richtungsangaben vorn und hinten sind hierbei vorliegend, soweit nichts anderes explizit gesagt, die Richtungen senkrecht zur Wandoberfläche nach außen von der Wand weg bzw. nach innen in die Wand hinein gemeint.

In entsprechenden Ausführungsformen beinhaltet die Haltestruktur 7, wie in den gezeigten Ausführungsbeispielen, eine am Hülsenabschnitt 3 radial abstehende Haltewulststruktur 7a, die einteilig mit zumindest einem angrenzenden axialen Teilbereich 3a des Hülsenabschnitts 3 aus einem abdichtend nachgiebigen Material gebildet ist, und eine mit der Haltewulststruktur 7a zusammenwirkende Gegenhaltestruktur 7b, die an der Verlängerungshülse 6 aus einem gegenüber dem abdichtend nachgiebigen Material steiferen Material gebildet ist. Dieser axiale Teilbereich 3a des Hülsenabschnitts 3 kann irgendein Teilbereich des Hülsenabschnitts 3 beliebiger axialer Ausdehnung sein, der die Haltewulststruktur 7a mit umfasst. Alternativ kann der Hülsenabschnitt 3 insgesamt aus dem abdichtend nachgiebigen Material gebildet sein, in entsprechenden Realisierungen ist der Boxgehäusekörper 1 insgesamt einteilig aus diesem Material gebildet. Im Zusammenwirken des abdichtend nachgiebigen Materials der Haltewulststruktur 7a mit dem steiferen Material der Gegenhaltestruktur 7b ermöglicht die Haltestruktur 7 in vorteilhafter Weise mit relativ geringem Realisierungsaufwand ein ausreichend sicheres Halten der Verlängerungshülse 6 in ihrer jeweils gewünschten Endgebrauchsstellung E_{S} am Hülsenabschnitt 3 des Boxgehäusekörpers 1 und eine ausreichend abdichtende Verbindung der Verlängerungshülse 6 mit dem Hülsenabschnitt 3 des Boxgehäusekörpers 1 durch Reibschluss und/oder Formschluss.

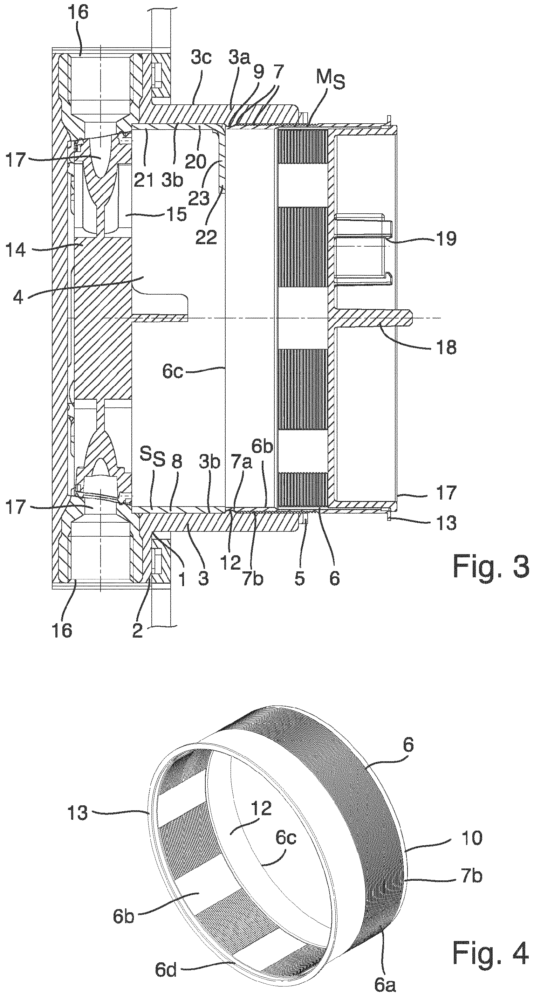

In entsprechenden Ausführungsformen umfasst die Wandeinbau-Anschlussboxeinheit, wie in den gezeigten Ausführungsbeispielen, ein Abstandshalterelement 8, das abnehmbar am Boxgehäusekörper 1 in einer Sicherungsstellung S_{S} anbringbar ist, in der es die Verlängerungshülse 6 in der Montagestellung M_{S} gegen axiales Zurückschieben, d.h. axiales Verschieben in einer Zurückschieberichtung Z_{R}, sichert, wie aus Fig. 3 ersichtlich. Dies kann insbesondere dazu genutzt werden, die Verlängerungshülse 6 vor und während der Wandmontage der Anschlussboxeinheit vor einem unerwünschten, vorzeitigen Zurückschieben aus ihrer Montagestellung M_{S} heraus zu schützen. Sobald die Wandoberfläche der betreffenden Gebäudewand, in bzw. an welcher die Anschlussboxeinheit montiert wird, fertiggestellt ist, kann diese Sicherung aufgehoben werden, indem das Abstandshalterelement 8 vom Boxgehäusekörper 1 abgenommen wird, d.h. von diesem entfernt wird.

Im gezeigten Ausführungsbeispiel sind beide vorstehend genannten Erfindungsaspekte hinsichtlich Bildung der Haltestruktur 7 als Haltewulststruktur 7a und hinsichtlich des temporär verwendeten Abstandshalterelements 8 verwirklicht. In alternativen Ausführungen ist nur einer dieser beiden Erfindungsaspekte verwirklicht.

Die gezeigte Wandeinbau-Anschlussboxeinheit kann insbesondere als sanitäre Wandeinbau-Anschlussboxeinheit zum Anschließen von Sanitärkomponenten an gebäudeseitige Wasserleitungsanschlüsse konfiguriert sein, wie eingangs erläutert, wobei der Hülsenabschnitt 3 des Boxgehäusekörpers 1 umfangsseitig einen dann als Sanitärkomponenten-Aufnahmeraum konfigurierten Einbaukomponenten-Aufnahmeraum 4 umgibt, der über ein offenes vorderes Stirnende 5 des Hülsenabschnitts 3 bzw. der Verlängerungshülse 6 zugänglich ist, über das die Einbaukomponente, wie eine Sanitärkomponente, in den Boxgehäusekörper 1 eingebracht werden kann, wie beispielsweise in den Fig. 1 und 8 ersichtlich. In alternativen, nicht gezeigten Ausführungsformen ist die Wandeinbau-Anschlussboxeinheit als elektrische Wandeinbau-Anschlussboxeinheit zum Anschließen von elektrischen Komponenten an gebäudeseitige Elektroleitungsanschlüsse konfiguriert, wie ebenfalls eingangs erläutert, wobei dann der Einbaukomponenten-Aufnahmeraum 4 einen Elektrokomponenten-Aufnahmeraum bildet, in den über das offene vordere Stirnende 5 des Hülsenabschnitts 3 die betreffende elektrische Komponente in den Boxgehäusekörper 1 eingebracht werden kann.

Als fluid- bzw. leitungsverbindendes Bindeglied fungiert ein im Basisabschnitt 2 angeordneter bzw. gehaltener Anschlusskörper 14, der eine dem Einbaukomponenten-Aufnahmeraum 4 zugewandte Einbaukomponenten-Anschlusskontur 15, d.h. im Sanitärfall eine Sanitärkomponenten-Anschlusskontur und im Elektrofall eine Elektrokomponenten-Anschlusskontur, eine an einer Außenseite des Boxgehäusekörpers 1 zugängliche Leitungs-Anschlussschnittstellenstruktur 16, d.h. im Sanitärfall eine Fluidleitungs-Anschlussschnittstellenstruktur und im Elektrofall eine Elektroleitungs-Anschlussschnittstellenstruktur, und im Sanitärfall eine Fluidkanalstruktur 17 zur Fluidverbindung der Fluidleitungs-Anschlussschnittstellenstruktur 16 mit der Sanitärkomponenten-Anschlusskontur 15, im Elektrofall eine elektrisch leitende Verbindung der boxaußenseitigen Elektroleitungs-Anschlussschnittstellenstruktur mit der boxinnenseitigen Elektrokomponenten-Anschlusskontur, aufweist, wie insbesondere aus den Fig. 1 bis 3 und 8 zu erkennen. Anschlusskörper mit derartigen funktionellen Komponenten zur Verwendung in der Sanitär- bzw. Elektroinstallationstechnik sind dem Fachmann an sich bekannt, worauf vorliegend nicht näher eingegangen zu werden braucht.

In vorteilhaften Ausführungen beinhaltet die Haltewulststruktur 7a, wie bei den gezeigten Ausführungsbeispielen, eine umfangsseitig durchgehend umlaufende Haltewulst 9, die wie gezeigt an einer Innenseite 3b des Hülsenabschnitts 3 radial nach innen oder alternativ an einer Außenseite 3c des Hülsenabschnitts 3 radial nach außen absteht. Im gezeigten Beispiel beinhaltet die Haltewulststruktur 7a nur eine einzige Haltewulst 9, in alternativen Ausführungen eine Mehrzahl von mit axialem Abstand voneinander umfangsseitig durchgehend umlaufenden Haltewülsten.

In vorteilhaften Ausführungsformen ist die Haltewulststruktur 7a aus einem Kunststoffschaummaterial gebildet, bei dem es sich insbesondere um ein thermoplastisches Partikelschaummaterial handeln kann, wie um einen Polypropylen-Partikelschaum. Alternativ ist die Haltewulststruktur 7a aus einem anderen abdichtend nachgiebigen Material gebildet, z.B. einem Dichtgummimaterial. In entsprechenden Realisierungen ist nicht nur die Haltewulststruktur 7a, sondern auch der Hülsenabschnitt 3 oder der Boxgehäusekörper 1 aus diesem Kunststoffschaummaterial gebildet. So ist im gezeigten Ausführungsbeispiel der Boxgehäusekörper 1 insgesamt einteilig gebildet, z.B. aus einem Kunststoffschaummaterial, alternativ aus einem anderen abdichtend nachgiebigen Material, wobei der Anschlusskörper 14 in das Kunststoffschaummaterial des Basisabschnitts 2 des Boxgehäusekörpers 1 eingebettet ist.

In vorteilhaften Ausführungsformen beinhaltet die Gegenhaltestruktur 7b, wie im gezeigten Beispiel, eine Haltezahnstruktur 10 mit einer Mehrzahl von axial aufeinanderfolgenden Haltezähnen 11, die umfangsseitig verlaufend an einer Außenseite 6a der Verlängerungshülse 6, wie gezeigt, radial nach außen oder alternativ an einer Innenseite 6b der Verlängerungshülse 6 radial nach innen abstehen. Die aus dem steiferen Material der Gegenhaltestruktur 7b bestehenden Haltezähne 11 können in das abdichtend nachgiebige Material der Haltewulststruktur 7a eingreifen bzw. sich in dieses hineinkrallen, was in einem sehr sicheren und gut abgedichteten Halten der Verlängerungshülse 6 am Hülsenabschnitt 2 des Boxgehäusekörpers 1 in der Endgebrauchsstellung E_{S} sowohl durch diesen Formschluss als auch durch den Reibschluss resultiert, der durch das andrückende Anliegen der Haltewulststruktur 7a gegen die Gegenhaltestruktur 7b aus dem steiferen Material bereitgestellt wird. Außerdem ermöglicht diese Gestaltung der Gegenhaltestruktur 7b eine praktisch stufenlose Wahl der axialen Höhe der Endgebrauchsstellung E_{S} für die Verlängerungshülse 6 am Hülsenabschnitt 2.

In alternativen Ausführungen kann die Gegenhaltestruktur 7b von einem andersartig strukturierten bzw. profilierten Oberflächenbereich der Verlängerungshülse 6 gebildet sein, z.B. einer wellenlinienförmigen Profilierung bzw. Riffelung. In weiteren alternativen Realisierungen ist die Gegenhaltestruktur 7b allein durch die nicht weiter strukturierte, äußere oder innere Hülsenmantelfläche an der Außenseite 6a oder der Innenseite 6b der Verlängerungshülse 6 gebildet.

In vorteilhaften Ausführungen weist die Haltezahnstruktur 10 mit ihren Haltezähnen 11 ein Sägezahnprofil mit in Zurückschieberichtung Z_{R} der Verlängerungshülse 6 weisenden, flacheren Zahnrückflanken 11a und gegenüberliegenden, steileren Zahnfrontflanken 11b auf, wie im gezeigten Beispiel und wie insbesondere aus Fig. 6 ersichtlich. Diese Gestaltung der Haltezahnstruktur 10 stellt einen im Vergleich zur Zurückschiebekraft, die zum Zurückschieben der Verlängerungshülse 6 in der Zurückschieberichtung Z_{R} erforderlich ist, höheren Widerstand gegen ein Vorbewegen, d.h. Herausbewegen, der Verlängerungshülse 6 in der entgegengesetzten Richtung bereit.

Denn mit ihren im Vergleich zu den Zahnfrontflanken 11b flacheren Zahnrückflanken 11a kann die Haltewulststruktur 7a, wie die Haltewulst 9, relativ leicht auf die Haltezahnstruktur 10 aufgleiten, wenn die Verlängerungshülse 6 von ihrer Montagestellung M_{S} in ihre Endgebrauchsstellung E_{S} zurückgeschoben wird, während die Haltezähne 11 mit ihren steileren Zahnfrontflanken 11b stärker in die Haltewulststruktur 7b, wie die Haltewulst 9, eingreifen und sich sperrend in diese einkrallen, wenn versucht wird, die Verlängerungshülse 6 entgegen der Zurückschieberichtung Z_{R} relativ zum Halteabschnitt 2 des Boxgehäusekörpers 1 axial aus der Endgebrauchsstellung E_{S} heraus vorzubewegen, d.h. in Richtung aus dem Hülsenabschnitt 2 des Boxgehäusekörpers 1 heraus zu bewegen. Diese Zahngestaltung resultiert folglich in einer Unsymmetrie für das Hinein- bzw. Herausbewegen der Verlängerungshülse 6 in den Hülsenabschnitt 2 hinein bzw. aus diesem heraus, mit einer Vorzugsbewegungsrichtung axial nach hinten in Richtung in den Hülsenabschnitt 2 hinein In alternativen Ausführungen kann die Haltezahnstruktur 7b mit ihren Haltezähnen 11 ein andersartiges Zahnprofil aufweisen, z.B. ein bezüglich der axialen Hülsenverschieberichtung symmetrisches dreieckförmiges Zahnprofil ohne Vorzugsbewegungsrichtung der Verlängerungshülse 6 axial nach hinten.

In vorteilhaften Ausführungsformen ist die Haltezahnstruktur 10, wie beim gezeigten Ausführungsbeispiel, mit axialem Abstand von einem rückwärtigen Stirnende 6c der Verlängerungshülse 6 angeordnet, und ein sich vom rückwärtigen Stirnende 6c axial bis höchstens zur Haltezahnstruktur 10 erstreckender Abschnitt der Verlängerungshülse 6 bildet einen Vormontage-Steckbereich 12, der zum vormontiert gesteckten Halten der Verlängerungshülse 6 in ihrer Montagestellung M_{S} am Hülsenabschnitt 2 des Boxgehäusekörpers 1 eingerichtet ist.

Konkret wirkt hierbei im gezeigten Beispiel der Vormontage-Steckbereich 12 der Verlängerungshülse 6 mit der Haltewulststruktur 10, wie der Haltewulst 9, zusammen, wie insbesondere in den Fig. 1 und 3 ersichtlich. Dabei legt sich die Haltewulststruktur 10 außen gegen den Vormontage-Steckbereich 12 an, wodurch die Verlängerungshülse 6 primär mittels Reibschluss in ihrer Montagestellung M_{S} am Hülsenabschnitt 2 gehalten wird. Da der Vormontage-Steckbereich 12 axial hinter der Haltezahnstruktur 10 liegt, befindet sich die Haltezahnstruktur 10 in der Montagestellung M_{S} der Verlängerungshülse 6 noch nicht in Wirkeingriff mit der Haltewulststruktur 7a. Dies hat zur Folge, dass die Verlängerungshülse 6 bei Bedarf relativ leicht, d.h. mit vergleichsweise geringem Kraftbedarf, wieder von ihrer Montagestellung M_{S} am Hülsenabschnitt 2 nach außen vorbewegt, d.h. wegbewegt, bzw. vom Hülsenabschnitt 2 abgenommen werden kann, während das Herausbewegen der Verlängerungshülse 6 aus ihrer Endgebrauchsstellung E_{S} vorzugsweise einen deutlich höheren Kraftaufwand erfordert oder gar nicht mehr ohne Schädigung der Haltewulststruktur 7a möglich ist.

In entsprechenden Realisierungen weist die Verlängerungshülse 6, wie beim gezeigten Beispiel, an ihrem vorderen, freien, offenen Stirnende 6d einen radial nach außen abstehenden Abschlussringflansch 13 auf. Dieser kann z.B. als Anschlagfläche genutzt werden, mit welcher die Verlängerungshülse 6 gegen eine fertiggestellte Gebäudewandoberfläche zur Anlage kommt, wenn die Verlängerungshülse 6 in ihre Endgebrauchsposition E_{S} zurückgeschoben wird.

In entsprechenden Realisierungen ist, wie beim gezeigten Beispiel, am vorderen Stirnende 6d der Verlängerungshülse 6 ein optionaler Montagedeckel 17 anbringbar, und zwar dergestalt, dass er vom vorderen Stirnende 6d der Verlängerungshülse 6 leicht wieder abgenommen werden kann. Im gezeigten Beispiel ist er dazu speziell topfförmig gestaltet und mit seinem Topfboden voraus bis zu seinem offenen Topfrand in die Verlängerungshülse 6 an deren vorderem Stirnende 6a eingesteckt und kann aus dieser Position leicht wieder abgezogen werden. In entsprechenden Ausführungen beinhaltet der Montagedeckel 17, wie im gezeigten Beispiel, einen vorzugsweise mittigen Griffdorn 18 und/oder eine Libellenhalterung 19 zum vorzugsweise geclipsten oder anderweitig lösbaren Halten einer als Ausrichthilfe verwendbaren Libelle bzw. Dosenlibelle.

In vorteilhaften Ausführungsformen beinhaltet das Abstandshalterelement 8, wie im gezeigten Ausführungsbeispiel, eine Abstandshalterhülse 20, die in der Sicherungsstellung S_{S} koaxial am Hülsenabschnitt 2 des Boxgehäusekörpers 1 in einem axialen Bereich hinter der Verlängerungshülse 6 angeordnet ist, wie insbesondere aus Fig. 3 ersichtlich, wobei die Gestalt der Abstandshalterhülse 20 insbesondere aus den Fig. 2 und 7 ersichtlich ist.

In vorteilhaften Realisierungen ist die Abstandshalterhülse 20, wie im gezeigten Beispiel, als eine umfangsseitig offene, zusammenziehbare Ringhülse 21 ausgebildet und weist eine nutzerbetätigbare Zuziehbetätigungsstruktur 22 auf. Aufgrund ihrer umfangsseitig offenen Gestalt weist die Ringhülse 21 zwei sich in Umfangsrichtung mit Abstand gegenüberliegende Umfangsendbereiche 21a, 21b auf, wie in Fig. 7 markiert. Durch diese Realisierung kann die Abstandshalterhülse 20 vom Benutzer an der Zuziehbetätigungsstruktur 22 gegriffen und in einem gewissen, durch den Umfangsabstand der beiden Umfangsendbereiche 21a, 21b gegebenen Maß zusammengezogen, d.h. in ihrer radialen Ausdehnung verengt, werden. Dies erleichtert das Einbringen der Abstandshalterhülse 20 in den Innenraum des Hülsenabschnitts 2 des Boxgehäusekörpers 1 und in gleicher Weise das Herausnehmen der Abstandshalterhülse 20 aus dem Hülsenabschnitt 2.

In entsprechenden Realisierungen weist die Abstandshalterhülse 20, wie beim gezeigten Beispiel, an einem vorderen, d.h. in montierter Stellung entgegen der Zurückschieberichtung Z_{R} der Verlängerungshülse 6 weisenden, Stirnende 20a eine radial nach innen abkragende Flanschstruktur 23 auf. Diese kann als Anlagefläche dienen, gegen welche die Verlängerungshülse 6 zur Anlage kommt, wenn sich die Abstandshalterhülse 20 in ihrer montierten Stellung im Hülsenabschnitt 2 des Boxgehäusekörpers 1 befindet und die Verlängerungshülse 6 am Hülsenabschnitt 2 positioniert und bis zu ihrer Montageposition M_{S} zurückgeschoben wird. Alternativ oder zusätzlich fungiert der Stirnrand des vorderen Stirnendes 20a der Abstandshülse 20 als ein solcher Anschlag für das Positionieren der Verlängerungshülse 6 in ihrer Montagestellung M_{S}.

Alternativ oder zusätzlich zu dieser Anschlagfunktion kann die Flanschstruktur 23 als die Zuziehbetätigungsstruktur 22 fungieren. Dazu beinhaltet die Flanschstruktur 23 im gezeigten Beispiel zwei Flanscharme 23a, 23b an je einem der beiden Umfangsendbereichen 21a, 21b, welche die Ringhülse 21 aufgrund ihrer umfangsseitig offenen Gestalt aufweist. Der Benutzer kann, wenn sich die Abstandshalterhülse 20 in ihrer montierten Stellung im Hülsenabschnitt 2 des Boxgehäusekörpers 1 befindet, leicht mit einer Hand in den Innenraum des Hülsenabschnitts 2 greifen und die beiden Flanscharme 23a, 23b mit zwei Fingern fassen und aufeinander zu bewegen, um die Abstandshalterhülse 20 etwas zusammenzuziehen. Anschließend kann er die auf diese Weise radial verengte Abstandshalterhülse 20 leicht aus dem Hülsenabschnitt 2 des Boxgehäusekörpers 1 herausnehmen. In analoger Weise kann er umgekehrt die Abstandshalterhülse 20 leicht in den Hülsenabschnitt 2 einsetzen.

## Patentansprüche

1. Wandeinbau-Anschlussboxeinheit mit
- einem Boxgehäusekörper (1) mit einem rückseitigen Basisabschnitt (2) und einem vom Basisabschnitt nach vorn vorstehenden Hülsenabschnitt (3), der umfangsseitig einen über ein offenes vorderes Stirnende (5) des Hülsenabschnitts zugänglichen Einbaukomponenten-Aufnahmeraum (4) umgibt,
- einer Verlängerungshülse (6), die zum koaxialen Anordnen am Hülsenabschnitt und axialen Zurückschieben relativ zum Hülsenabschnitt eingerichtet ist, und
- einer Haltestruktur (7), die ein axiales Zurückschieben der Verlängerungshülse am Hülsenabschnitt von einer Montagestellung (M_{S}) in eine Endgebrauchsstellung (E_{S}) auf variabler axialer Höhe (H_{E}) zulässt und die Verlängerungshülse in der Endgebrauchsstellung am Hülsenabschnitt hält, wobei die Haltestruktur (7) eine am Hülsenabschnitt (3) radial abstehende Haltewulststruktur (7a) und eine mit der Haltewulststruktur reib- und/oder formschlüssig zusammenwirkende, an der Verlängerungshülse gebildete Gegenhaltestruktur (7b) beinhaltet,
**dadurch gekennzeichnet, dass** die Haltewulststruktur aus einem abdichtend nachgiebigen Material einteilig mit zumindest einem angrenzenden axialen Teilbereich (3a) des Hülsenabschnitts (3) aus dem abdichtend nachgiebigen Material gebildet ist und die Gegenhaltestruktur (7b) aus einem gegenüber dem abdichtend nachgiebigen Material steiferen Material gebildet ist.

2. Wandeinbau-Anschlussboxeinheit nach Anspruch 1, weiter **dadurch gekennzeichnet, dass** die Wandeinbau-Anschlussboxeinheit ein Abstandshalterelement (8) umfasst, das abnehmbar am Boxgehäusekörper (1) in einer Sicherungsstellung anbringbar ist, in der es die Verlängerungshülse in der Montagestellung (M_{S}) gegen axiales Zurückschieben sichert.

3. Wandeinbau-Anschlussboxeinheit nach Anspruch 1 oder 2, weiter **dadurch gekennzeichnet, dass** die Haltewulststruktur eine umfangsseitig durchgehend umlaufende Haltewulst (9) beinhaltet, die an einer Innenseite (3b) des Hülsenabschnitts radial nach innen oder an einer Außenseite (3c) des Hülsenabschnitts radial nach außen absteht.

4. Wandeinbau-Anschlussboxeinheit nach einem der Ansprüche 1 bis 3, weiter **dadurch gekennzeichnet, dass** die Haltewulststruktur aus einem Kunststoffschaummaterial, insbesondere einem thermoplastischen Partikelschaummaterial, gebildet ist.

5. Wandeinbau-Anschlussboxeinheit nach einem der Ansprüche 1 bis 4, weiter **dadurch gekennzeichnet, dass** die Gegenhaltestruktur eine Haltezahnstruktur (10) mit einer Mehrzahl von axial aufeinanderfolgenden Haltezähnen (11) beinhaltet, die umfangsseitig verlaufend an einer Außenseite (6a) der Verlängerungshülse radial nach außen oder an einer Innenseite (6b) der Verlängerungshülse radial nach innen abstehen.

6. Wandeinbau-Anschlussboxeinheit nach Anspruch 5, weiter **dadurch gekennzeichnet, dass** die Haltezahnstruktur mit ihren Haltezähnen ein Sägezahnprofil mit einer in Zurückschieberichtung (Z_{R}) der Verlängerungshülse weisenden, flacheren Zahnrückflanken (11a) und gegenüberliegenden, steileren Zahnfrontflanken (11b) aufweist.

7. Wandeinbau-Anschlussboxeinheit nach Anspruch 5 oder 6, weiter **dadurch gekennzeichnet, dass** die Haltezahnstruktur mit axialem Abstand von einem rückwärtigen Stirnende (6c) der Verlängerungshülse angeordnet ist und ein sich vom rückwärtigen Stirnende axial bis höchstens zur Haltezahnstruktur erstreckender Abschnitt der Verlängerungshülse einen Vormontage-Steckbereich (12) bildet, der zum vormontiert gesteckten Halten der Verlängerungshülse in ihrer Montagestellung am Hülsenabschnitt des Boxgehäusekörpers eingerichtet ist.

8. Wandeinbau-Anschlussboxeinheit nach einem der Ansprüche 1 bis 7, weiter **dadurch gekennzeichnet, dass** die Verlängerungshülse an einem vorderen Stirnende (6d) einen radial nach außen abstehenden Abschlussringflansch (13) aufweist.

9. Wandeinbau-Anschlussboxeinheit nach einem der Ansprüche 1 bis 8, weiter **dadurch gekennzeichnet, dass** an einem vorderen Stirnende (6d) der Verlängerungshülse ein Montagedeckel (17) abnehmbar anbringbar ist.

10. Wandeinbau-Anschlussboxeinheit nach einem der Ansprüche 2 bis 9, weiter **dadurch gekennzeichnet, dass** das Abstandshalterelement eine Abstandshalterhülse (20) beinhaltet, die in der Sicherungsstellung koaxial am Hülsenabschnitt in einem axialen Bereich hinter der Verlängerungshülse angeordnet ist.

11. Wandeinbau-Anschlussboxeinheit nach Anspruch 10, weiter **dadurch gekennzeichnet, dass** die Abstandshalterhülse als eine umfangsseitig offene, zusammenziehbare Ringhülse (21) ausgebildet ist und eine nutzerbetätigbare Zuziehbetätigungsstruktur (22) aufweist.

12. Wandeinbau-Anschlussboxeinheit nach Anspruch 10 oder 11, weiter **dadurch gekennzeichnet, dass** die Abstandshalterhülse an einem vorderen Stirnende (20a) eine radial nach innen abkragende Flanschstruktur (23) aufweist.

## Claims

1. Wall installation connection box unit, comprising
- a box housing body (1) having a rear-side base portion (2) and a sleeve portion (3) projecting forward from the base portion, which sleeve portion peripherally surrounds an installation component mounting space (4), which space is accessible via an open front end face (5) of the sleeve portion,
- an extension sleeve (6) which is configured for coaxial arrangement on the sleeve portion and axial pushing back relative to the sleeve portion, and
- a retaining structure (7) which allows axial pushing back of the extension sleeve on the sleeve portion from a mounting position (M_{S}) to an end use position (E_{S}) on a variable axial level (H_{E}) and retains the extension sleeve in the end use position on the sleeve portion,
- wherein the retaining structure (7) includes a retaining ridge structure (7a) radially projecting from the sleeve portion (3), and a counter-retaining structure (7b) provided on the extension sleeve and cooperating with the retaining ridge structure in a frictionally engaged and/or form-locking manner,
**characterized in that**
- the retaining ridge structure is formed integrally with at least an adjacent axial partial region (3a) of the sleeve portion (3) from a sealing resilient material, and the counter-retaining structure (7b) is made of a material which has greater stiffness as compared to the sealing resilient material.

2. Wall installation connection box unit according to claim 1, further **characterized in that** the wall installation connection box unit comprises a spacer element (8) which is attachable to the box housing body (1) in a securing position in a detachable manner, where the spacer element secures the extension sleeve in the mounting position (M_{S}) against axial pushing back.

3. Wall installation connection box unit according to claim 1 or 2, further **characterized in that** the retaining ridge structure includes a continuous circumferential retaining ridge (9) on its peripheral side, which retaining ridge protrudes radially inwards on an inner side (3b) of the sleeve portion, or radially outwards on an outer side (3c) of the sleeve portion.

4. Wall installation connection box unit according to any one of claims 1 to 3, further **characterized in that** the retaining ridge structure is formed from a synthetic foamed material, preferably a thermoplastic particle foamed material.

5. Wall installation connection box unit according to any one of claims 1 to 4, further **characterized in that** the counter-retaining structure includes a retaining tooth structure (10) having a plurality of axially successive retaining teeth (11) which, extending peripherally, protrude radially outwards on an outer side (6a) of the extension sleeve, or radially inwards on an inner side (6b) of the extension sleeve.

6. Wall installation connection box unit according to claim 5, further **characterized in that** the retaining tooth structure with the retaining teeth thereof comprises a saw tooth profile including flatter tooth trailing edges (11a) pointing in the push-back direction (Z_{R}) of the extension sleeve, and opposed thereto steeper tooth front edges (11b).

7. Wall installation connection box unit according to claim 5 or 6, further **characterized in that** the retaining tooth structure is disposed with an axial distance to a rearward end face (6c) of the extension sleeve, and a portion of the extension sleeve extending from the rearward end face axially up to at most to the retaining tooth structure provides a preassembly mating area (12) which is configured for preassembled plugged retaining of the extension sleeve in its mounting position on the sleeve portion of the box housing body.

8. Wall installation connection box unit according to any one of claims 1 to 7, further **characterized in that** the extension sleeve has a radially outwards protruding blind ring flange (13) at a front end face (6d).

9. Wall installation connection box unit according to any one of claims 1 to 8, further **characterized in that** a mounting cover (17) is attachable on a front end face (6d) of the extension sleeve in a detachable manner.

10. Wall installation connection box unit according to any one of claims 2 to 9, further **characterized in that** the spacer element includes a spacer sleeve (20) which in the securing position is disposed coaxially on the sleeve portion in an axial region behind the extension sleeve.

11. Wall installation connection box unit according to claim 10, further **characterized in that** the spacer sleeve is formed as a constrictable annular sleeve (21) which is open on its peripheral side and includes a user-operable tightening actuation structure (22).

12. Wall installation connection box unit according to claim 10 or 11, further **characterized in that** the spacer sleeve comprises a radially inwards projecting flange structure (23) on a front end face (20a).

## Revendications

1. Unité de boîte de raccordement pour montage encastré avec
- un corps de boîtier de boîte (1) avec une section de base (2) côté arrière et une section de manchon (3) dépassant de la section de base, vers l'avant, laquelle section de manchon entoure du côté circonférentiel un espace de logement (4) de composants encastrés, accessible via une extrémité frontale (5) avant, ouverte de la section de manchon,
- un manchon de rallonge (6) qui est conçu pour la disposition coaxiale sur la section de manchon et le repoussement axial par rapport à la section de manchon, et
- une structure de maintien (7) qui permet un repoussement axial du manchon de rallonge sur la section de manchon, d'une position de montage (M_{S}) jusque dans une position d'utilisation finale (E_{S}) à une hauteur axiale variable (H_{E}) et maintient le manchon de rallonge sur la section de manchon dans la position d'utilisation finale,
- sachant que la structure de maintien (7) comprend une structure à bourrelet de maintien (7a), saillant radialement sur la section de manchon (3) et une structure de contre-maintien (7b) formée sur le manchon de rallonge, interagissant avec la structure à bourrelet de maintien par frottement et/ou complémentarité de forme,
**caractérisée en ce que**
- la structure à bourrelet de maintien est constituée d'un matériau déformable de manière étanchéifiante, d'un seul tenant avec au moins une zone partielle (3a) axiale adjacente de la section de manchon (3) dans le matériau déformable de manière étanchéifiante et que la structure de contre-maintien (7b) est constituée d'un matériau plus rigide que le matériau déformable de manière étanchéifiante.

2. Unité de boîte de raccordement pour montage encastré selon la revendication 1, caractérisée également en ce que l'unité de boîte de raccordement pour montage encastré comprend un élément d'espacement (8) qui est installable de manière amovible sur le corps de boîtier de boîte (1), dans une position de blocage dans laquelle l'élément d'espacement bloque le manchon de rallonge dans la position de montage (M_{S}) pour empêcher un repoussement axial.

3. Unité de boîte de raccordement pour montage encastré selon la revendication 1 ou 2, caractérisée également en ce que la structure à bourrelet de maintien comprend un bourrelet de maintien (9) s'étendant de manière continue autour du côté circonférentiel, laquelle structure est saillante radialement vers l'intérieur, sur un côté intérieur (3b) de la section de manchon ou radialement vers l'extérieur, sur un côté extérieur (3c) de la section de manchon.

4. Unité de boîte de raccordement pour montage encastré selon la revendication 1 à 3, caractérisée également en ce que la structure à bourrelet de maintien est constituée d'un matériau en mousse synthétique, notamment d'un matériau en mousse particulaire thermoplastique.

5. Unité de boîte de raccordement pour montage encastré selon la revendication 1 à 4, caractérisée également en ce que la structure de contre-maintien contient une structure dentée de maintien (10) avec une pluralité de dents de maintien (11) se succédant axialement, qui, s'étendant du côté circonférentiel, sont saillantes radialement vers l'extérieur, sur un côté extérieur (6a) du manchon de rallonge ou radialement vers l'intérieur, sur un côté intérieur (6b) du manchon de rallonge.

6. Unité de boîte de raccordement pour montage encastré selon la revendication 5, caractérisée également en ce que la structure dentée de maintien présente, au niveau de ses dents de maintien, un profil en dents de scie avec des flancs arrière de dents (11a) plus plats, pointant dans le sens de repoussement (Z_{R}) du manchon de rallonge et des flancs avant de dents (11b) opposés, plus obliques.

7. Unité de boîte de raccordement pour montage encastré selon la revendication 5 ou 6, caractérisée également en ce que la structure dentée de maintien est disposée avec un écart axial par rapport à une extrémité frontale (6c) côté arrière du manchon de rallonge et qu'une section du manchon de rallonge, s'étendant axialement de l'extrémité frontale côté arrière à la structure dentée de maintien au maximum, forme une zone d'emboîtement de prémontage (12) qui est conçue sur la section de manchon du corps de boîtier de boîte, pour le maintien emboîté prémonté du manchon de rallonge dans sa position de montage.

8. Unité de boîte de raccordement pour montage encastré selon l'une des revendications 1 à 7, caractérisée également en ce que le manchon de rallonge présente, sur une extrémité frontale (6d) avant, une collerette terminale (13) saillant radialement vers l'extérieur.

9. Unité de boîte de raccordement pour montage encastré selon l'une des revendications 1 à 8, caractérisée également en ce qu'un couvercle de montage (17) est installable de manière amovible, sur une extrémité frontale (6d) avant du manchon de rallonge.

10. Unité de boîte de raccordement pour montage encastré selon l'une des revendications 2 à 9, caractérisée également en ce que l'élément d'espacement comprend un manchon d'espacement (20) qui, dans la position de blocage, est disposé coaxialement sur la section de manchon dans une zone axiale derrière le manchon de rallonge.

11. Unité de boîte de raccordement pour montage encastré selon la revendication 10, caractérisée également en ce que le manchon d'espacement est conçu sous la forme d'un manchon annulaire (21) contractable, ouvert du côté circonférentiel et présente une structure d'actionnement de fermeture (22) actionnable par l'utilisateur.

12. Unité de boîte de raccordement pour montage encastré selon la revendication 10 ou 11, caractérisée également en ce que le manchon d'espacement présente, sur une extrémité frontale (20a) avant, une structure de bride (23) faisant saillie radialement vers l'intérieur.
